# EUROPÄISCHE PATENTSCHRIFT

(11) **EP 0 600 211 B1**
(45) Veröffentlichungstag und Bekanntmachung des Hinweises auf die Patenterteilung: **16.06.1999**
(21) Anmeldenummer: 93117014.6
(22) Anmeldetag: 21.10.1993
(51) Int. Cl.: C01C 3/10

(54) **Verfahren zur Herstellung von festem Natriumcyanid**
Process for the preparation of solid sodium cyanide
Procédé pour la préparation de cyanure de sodium solide

(30) Priorität: 01.12.1992 DE 4240318
(43) Veröffentlichungstag der Anmeldung: 08.06.1994
(73) Patentinhaber: GLATT INGENIEURTECHNIK GmbH, D-99423 Weimar (DE)
(72) Erfinder: Wand, Bernhard, D-5300 Apolda (DE); Böber, Reinhard, D-5300 Weimar (DE); Rümpler, Karlheinz, Dr., D-5300 Weimar (DE); Prahl, Wolfgang, D-5300 Weimar (DE); Nowak, Reinhard, D-7852 Binzen (DE); Spielmann, Walter, D-1330 Schwedt (DE); Griep, Hans-Georg, D-1330 Schwedt (DE); Wichmann, Peter, D-1330 Schwedt (DE); Wittkopf, Egon, D-1330 Schwedt (DE); Döbler, Erhard, D-1330 Schwedt (DE)
(74) Vertreter: Schmitt, Hans, Dipl.-Ing.

(56) Entgegenhaltungen:
- DE-A- 3 832 883
- DE-B- 1 144 246
- DE-B- 1 150 367
- Glatt Firmenschrift AGT: Anlage für das kontinuierliche Granulieren und Trocknen. Februar 1992 * das ganze Dokument *
- CHEMICAL ABSTRACTS, vol. 96, no. 10, März 1982, Columbus, Ohio, US; abstract no. 70839m, A.P. ZVIGUNOV ET AL. 'Autonomous air heater for drying a sodium cyanide solution in a fluidized bed apparatus.' Seite 111 ;
- CHEMICAL ABSTRACTS, vol. 68, no. 24, 1968, Columbus, Ohio, US; abstract no. 106506p, D. SANDRU ET AL. 'Process for evaporating and drying solutions of cyanides.' Seite 10299 ;
- CHEM. ING. TECHN., Bd.62, Nr.10, September 1990, WEINHEIM (DE) Seiten 822 - 834 H. UHLEMANN 'Kontinuierliche Wirbelschicht-Sprühgranulation.'
- GERHARTZ W. & YAMAMOTO Y.S. 'Ullmann's Encyclopedia of Industrial Chemistry' 1987 , VCH-VERLAG , WEINHEIM (DE) * Band A8, Seite 168 *

## Beschreibung

Die Erfindung betrifft ein Verfahren zur Herstellung von festem granulierten Natriumcyanid, bei dem eine wässrige Natriumcyanidlösung von 30 bis 45 Masseanteile, die bis zu 5 Masseanteile in % Feststoff enthält, einer Wirbelschichtgranulation zugeführt wird.

Die Herstellung von festem Natriumcyanid aus seinen Lösungen erfolgt bekanntermaßen über die Prozeßstufen Kristallisation, Entwässerung, Trocknung oder nach dem Prinzip der Zerstäubungstrocknung.

Alle diese Verfahrensschritte sind bekannt und in den verschiedensten Ausführungsformen beschrieben.

Bekannt ist auch die für eine gefahrlose Handhabung des festen Cyanids unerläßliche Weiterverarbeitung zu Kompaktlingen, Briketts oder Tabletten.
Nachteilig sind der hohe Aufwand und teilweise technisch schwer beherrschbare Systeme (DE-PS 1120437). Die Bildung von Granulaten durch Kompaktieren erfordert z. B. eine ganz spezielle Feuchte und Zusammensetzung. Festes Natriumcyanid ist nur mit einem Wassergehalt zwischen 0,2 und 1 Masseanteil in % problemlos kompaktierbar. Im Falle zu geringen Feuchtegehaltes zerfällt der Kompaktling. Ist die Feuchte größer als 1 Masseanteil in %, kommt es zum Verkleben der Kompaktiereinrichtung. Dieser Feuchtebereich wird aber durch die international üblichen Qualitätsanforderungen (max. 2 Masseanteile in % Verunreinigungen und Wasser) stark eingeschränkt, da bedingt durch Rohstoffverunreinigungen und notwendige Restalkalität in der Neutralisationsstufe des NaCN-Prozesses weit mehr als 1 Masseanteil in % sonstige Substanzen vorhanden sind.

Damit ergeben sich extreme Anforderungen hinsichtlich des eng begrenzten Arbeitsbereiches der Trocknungsstufe (0,2 - 0,4 Masseanteile in % H₂ O). Auch größere Gehalte an Natriumformiat erschweren die Bildung von Kompaktlingen. In der US-PS 3207574 wird der Eisengehalt als einer der Hauptfaktoren für die Kompaktierbarkeit angesehen.

In der DE-OS 1928872 werden Temperaturen von 125 - 225 °C für die Kompaktierung angegeben. Dieser Bereich ist für Belange der Kompaktierung sehr energieaufwendig.
Die nach den bekannten Technologien hergestellten NaCN-Festprodukte (Kompaktlinge, Tabletten, Briketts) weisen weiterhin entscheidende Nachteile hinsichtlich ihrer Anwendungs- und Handhabungseigenschaften auf.
1. NaCN wird in den meisten Anwendungsfällen in Form von Lösungen eingesetzt, d. h. das in Preßformen vorliegende NaCN wird wieder aufgelöst. Dieser Prozeß erfordert aufgrund der glatten Oberfläche, der Größe der Preßlinge und der hohen Dichte erhebliche Lösezeiten und hohen Energieaufwand.
2. Aufgrund der Scharfkantigkeit sowie der Gratbildung an den Kanten der Preßlinge kommt es bei der Befüllung der Transportbehälter sowie beim Transport zu einem erheblichen Abrieb, was bei der Handhabung zur Staubbelästigung und Gefährdung führt.

Auch für die Kristallisationsstufe sind erhebliche Mängel zu verzeichnen. Bei Nichteinhaltung von Temperaturen um 65 °C tritt Formiatbildung auf, wodurch die Endproduktqualität negativ beeinflußt wird. Dies erfordert aber erheblichen Aufwand für die Vakuumerzeugung. Im Prozeß anfallende Brüden mit einem Ammoniakgehalt von ca. 1500 ppm und einem Cyanidgehalt von ca. 1000 ppm müssen entgiftet und vom Ammoniak befreit werden.

Bei Einsatz eines diskontinuierlichen Kristallisators kann außerdem die in der Neutralisationsstufe anfallende Reaktionswärme nicht genutzt werden, da die Zwischenlagerung wegen der Formiatbildungsgefahr bei Temperaturen von ca. 50 °C erfolgen muß (DD-WP 246 226). Mit dem Prinzip der Zerstäubungstrocknung nach der DE-PS 969 731 werden zwar diese Nachteile ausgeschaltet, eine gefahrlose und sichere Handhabung des getrockneten feinen NaCN-Pulvers ist aber nicht gegeben. Deshalb muß kompaktiert werden, wobei sich die oben geschilderten Schwierigkeiten ergeben.

Weitere Probleme können bei der Zwischenlagerung des NaCN-Pulvers durch Klumpen- und Brückenbildung auftreten.

Aus der Glatt-Firmenschrift AGT, "Anlage für das kontinuierliche Granulieren und Trocknen", Februar 1992, ist bereits ein Verfahren zur Trocknung und gleichzeitigen Granulierung chemischer Produkte, beispielsweise von Cyaniden, bekannt, bei dem eine Suspension oder ein flüssiger Ausgangsstoff in einem Wirbelschichtgranuliertrockner eingespritzt wird. Dabei wird die Größen-Klassifizierung der entstehenden Granulate mittels der Entleer-Methode eng begrenzt. Mit dem vorbekannten Verfahren ist es zwar möglich, die Granalien in der gewünschten Korngröße herzustellen, jedoch weisen diese Granalien nicht die gewünschte niedrige Restfeuchte auf. Eine einfache Nachtrocknung der Granalien ist auch nicht möglich, da die Granalien aufgrund ihres hohen Feuchtigkeitsgehaltes zusammenbacken würden.

In der DE 38 32 883 A1 ist bereits ein Verfahren zur Herstellung von sehr trockenem Cyanid beschrieben. Das vorbekannte Verfahren umfaßt die Sprühtrocknung einer Cyanidlösung, Granulation des festen Produktes in einem Wirbelbett und Nachbehandlung zur Einstellung des Restfeuchtegehaltes. Dabei entsteht durch die Zerstäubung der aufgegebenen Lauge ein sehr feinpulveriges Endmaterial, das für die weitere Bearbeitung schlecht geeignet beziehungsweise ungeeignet ist. Zur Vermeidung dieses Nachteils wird das sprühgetrocknete Material bei dem vorbekannten Verfahren in einer nachgeschalteten Granuliervorrichtung granuliert und nachgetrocknet. Nachteilig dabei ist jedoch, daß das mit einer Restfeuchte von größer als 1 Masseanteil in % sprühgetrocknete Natriumcyanid durch mechanisch bewegte Teile wie Schnecken, Zellradschleusen und dergleichen aus dem Sprühtrockner zur Granulation und Nachtrocknung ausgetragen wird. Dabei treten die bereits erwähnten Probleme hinsichtlich des Verklebens der mechanisch bewegten Teile auf, die letztendlich zu Betriebsstörungen führen. Bei dem in DE 38 32 883 A1 beschriebenen Verfahren kann daher ein Verkleben des Materials an den Austragsvorrichtungen des Sprühtrockners sowie in der nachgeschalteten Granulier- und Trocknungseinrichtung nicht vermieden werden.

Insgesamt sind bei den bisherigen Verfahrensweisen ein sehr hoher apparativer Aufwand und ein erhebliches Potential an technologischen und technischen Störfaktoren vorhanden.

Das Ziel der Erfindung ist es, ein wirtschaftliches Verfahren zur Herstellung von festem, gut handhabbarem Natriumcyanid von hoher Reinheit aus einer Lösung zu entwickeln, das sich durch geringen apparativen Aufwand auszeichnet und ohne Anfall von Schadstoffen betrieben werden kann.

Es besteht die Aufgabe, ein Verfahren zu schaffen, mit dem ohne Anfall von Mutterlauge oder anderer Abwässer leicht lösliches sowie gut lager- und dosierfähiges Natriumcyanid erzeugt wird, wobei der apparative Aufwand möglichst geringgehalten und technische und technologische Störfaktoren weitestgehend vermieden werden sollen. Diese Aufgabe wird erfindungsgemäß durch das Verfahren des Anspruchs 1 gelöst. Das Verfahren, bei dem eine wäßrige Natiumcyanidlösing (1) von 30 bis 45 Massenteile in %, die bis zu 5 Masseanteile in % Festsstoff enthält, einer Wirbelschichtgranulation zugeführt wird, ist dadurch gekennzeichnet, daß die Herstellung in zwei Verfahrensstufen erfolgt, wobei das in der ersten Verfahrensstufe mittels an sich bekannter Wirbelschichtgranulation auf 2 bis 6 mm Korngröße und einer Restfeuchte von 1,5 bis 4 Masseanteilen in % granulierte Natriumcyanid mittels klassierendem Abzug und Zellenrad der als Wirbelschicht eines Trockners (14) ausgebildeten zweiten Verfahrensstufe zur Trocknung durch einen Luftstrom mit (25) Anfangstemperaturen von 150°C bis 230°C auf eine beliebige einstellbare Restfeuchte von kleiner 1,5 Masseanteile in % zugeführt und über ein Zellenrad abgezogen wird, und daß das Trocknungsgas der zweiten Verfahrensstufe der ersten Verfahrensstufe zur Erzeugung der Wirbelschicht für die Wirbelschichtgranulierung zugeführt wird, wobei die Luft dabei auf 60°C bis 90°C abgekühlt wird.

Dabei können der Wassergehalt und der Durchmesser des Natriumcyanidgranulates beliebig eingestellt werden. Das Wesen der Erfindung ist gekennzeichnet dadurch, daß eine wäßrige Natriumcyanidlösung über eine Dosiereinrichtung in eine Wirbelschicht eines Granulators mit klassierendem Abzug eingedüst wird, wobei sich die Lösung in kleinen Tropfen an wirbelnde Granalien in der Wirbelschicht anlagert, das Wasser mittels Luft aus der nachgeschalteten Trocknungsstufe aufgenommen und entfernt wird und die sich vergrößernden Granalien die Wirbelschicht dann verlassen, wenn ihr Widerstand größer als der Auftrieb von Frischluft im zentralen Abzugsrohr ist. Die austretenden Granalien haben einen Durchmesser von 2 bis 6 mm. Die Restfeuchte liegt bei 1,5 bis 4 Masseanteile in % Wasser.
Mit einer anschließenden Wirbelschichttrocknung in einem Trockner kann die Endfeuchte des Granulates auf jeden beliebigen Endwert eingestellt werden. Trocknungsmittel ist von Kohlendioxid gereinigte Luft mit einer Temperatur von 150 - 230 °C am Lufteintritt. Das Verfahren bietet beispielsweise die Möglichkeit, bei Qualitätsproblemen infolge von Rohstoffverunreinigungen den Wassergehalt im Gegensatz zum Kompaktierverfahren auf Wassergehalte kleiner 0,2 Masseanteile in % zu fahren.

Andererseits hat sich gezeigt, daß bei geringeren Reinheitsanforderungen auch durchaus Wassergehalte größer 1 Masseanteil in % eingestellt werden können, ohne das Einschränkungen hinsichtlich der Handhabung etwa durch Verkleben oder Zusammenbacken zu verzeichnen sind. Ein weiterer Vorteil des erfindungsgemäßen Verfahrens besteht in der guten Wasserlöslichkeit des gebildeten Granulates, was für die Weiterverarbeitung von besonderer Bedeutung ist.
Staubförmiges Natriumcyanid wird durch einen Zyklon aus der Abluft ausgeschieden und in die Wirbelschicht als Granulationskeime zurückgeführt. Das Verfahren arbeitet abprodukt- und schadstofffrei, da in einer Naßabscheidung kleinste Natriumcyanidstaubteile ausgewaschen und in den Granulationsprozeß über eine Pumpe zurückgeführt werden.
Ein besonderer Vorteil des erfindungsgemäßen Verfahrens besteht im geringen apparativen Aufwand gegenüber den bisherigen Verfahren und im wesentlich geringeren Energieverbrauch im Vergleich zur Kombination Zerstäubungstrocknung - Kompaktierung. Gegenüber dem Verfahren mit Mutterlaugenausschleusung erhöht sich außerdem die Ausbeute und gegenüber dem Zerstäubungstrockner kann durch die zweistufige Verfahrensweise der Wärmeinhalt des Trocknungsmittels Luft optimal genutzt werden.
Eingesetzt wird eine Lösung von 30 bis 45 Masseanteile in % NaCN, wobei ein Feststoffgehalt bis zu 5 Masseanteilen in % nicht störend wirkt. Vorteilhaft ist auch, daß eine in einer kontinuierlichen Neutralisation erzeugte NaCN-Lösung direkt unter Ausnutzung der entstandenen Reaktionswärme in dem erfindungsgemäßen Verfahren eingesetzt werden kann.
Dies ist möglich, da durch die kurzen Verweilzeiten eine nachweisbare Formiatbildung nicht zu verzeichnen ist. Dabei entfallen der Vorratsbehälter und eine Dosierpumpe. Die im Naßabscheider aufkonzentrierte Waschlösung wird über eine Pumpe direkt in den Granulator zurückgeführt.

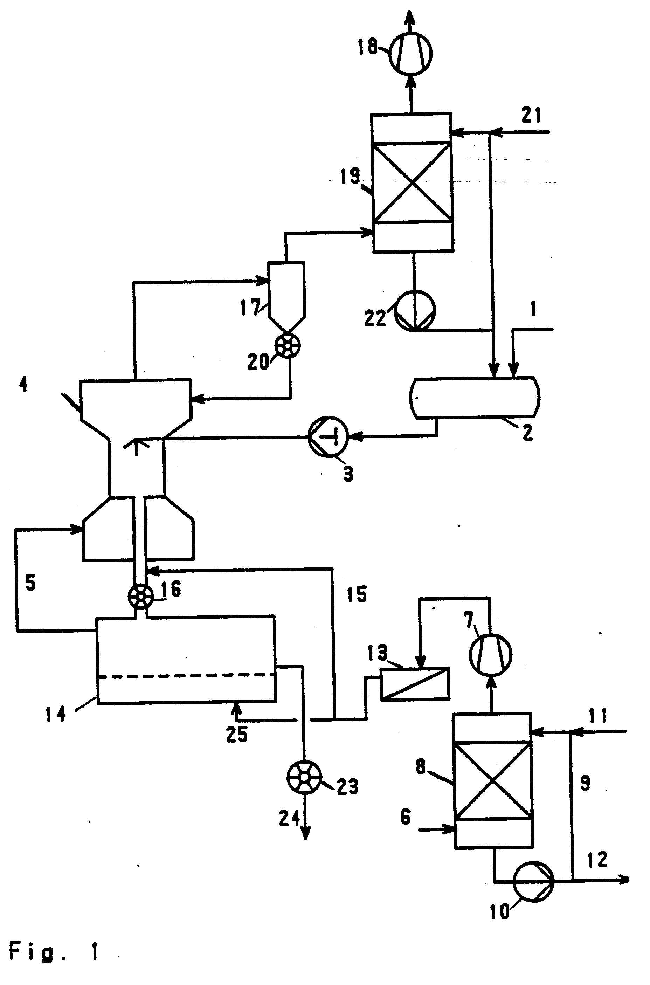

Die Erfindung wird anhand eines Beispieles näher erläutert. Die dazugehörige Zeichnung Fig. 1 zeigt in schematischer Darstellung eine Anordnung zur Erzeugung von Natriumcyanidgranulat. Eine wäßrige Natriumcyanidlösung 1 mit einem Gehalt von 43 Masseanteilen in % Natriumcyanid wird aus dem Vorratsbehälter 2 mittels Dosierpumpe 3 in den Wirbelschichtgranulator 4 eingedüst.
Wirbel- und Trocknungsmedium für den Granulator 4 ist der Luftstrom 5, der zuvor verschiedene Apparate durchläuft.

Um ein Granulat hoher Reinheit erzeugen zu können, wird ein Luftstrom 6 mittels Gebläse 7 über einen CO₂ -Waschturm 8 geführt und durch entgegenströmende verdünnte Natronlauge vom Kohlendioxid befreit. Der Natronlaugekreislauf wird von der Pumpe 10 erzeugt, wobei durch Zugabe frischer Natronlauge 11 und Abführung von Sodalösung 12 die Konzentration an Natronlauge limitiert wird.

Der Luftstrom wird in einem Wärmetauscher 13 auf 220 °C erhitzt und danach aufgeteilt in den Luftstrom 25, der im Gegenstrom zum Granulat aus dem Granulator 4 im Wirbelschichttrockner 14 zur Nachtrocknung auf eine Restfeuchte von 0,1 Masseanteilen in % dient, und in den Luftstrom 15, der im klassierenden Abzug mit Zellrad 16 des Granulators 4 eine Korngröße der Granalien von 5 mm reguliert. Zwischen Granulator und Trockner beträgt die Restfeuchte 3 Masseanteile in %.

Die im Granulator vereinigten Luftströme 5 und 15 werden im nachgeschalteten Zyklon 17 von 95 % des mitgerissenen NaCN-Staubes befreit und gelangen mittels Sauggebläse 18 in den Naßabscheider 19. Im Zyklon abgeschiedener NaCN-Staub wird über die Zellradschleuse 20 in den Wirbelschichtgranulator 4 zurückgeführt.
Das Waschwasser 21 für den Naßabscheider 19 wird über die Pumpe 22 im Kreislauf gefördert, wodurch eine Aufkonzentration stattfindet. In einem bestimmten Zyklus wird das Waschwasser in den Vorratsbehälter 2 gepumpt. Die gereinigte Luft verläßt den Naßabscheider über das Gebläse 18 in die Atmosphäre.

Das getrocknete Granulat 24 wird mittels Zellradschleuse 23 aus dem Wirbelschichttrockner 14 abgezogen und kann der Verpackung zugeführt werden.

## Patentansprüche

1. Verfahren zur Herstellung von festem granulierten Natriumcyanid, bei dem eine wäßrige Natriumcyanidlösung (1) von 30 bis 45 Masseanteile in %, die bis zu 5 Masseanteile in % Feststoff enthält, einer Wirbelschichtgranulation zugeführt wird, **dadurch gekennzeichnet**, daß die Herstellung in zwei Verfahrensstufen erfolgt, wobei das in der ersten Verfahrensstufe mittels an sich bekannter Wirbelschichtgranulation auf 2 bis 6 mm Korngröße und einer Restfeuchte von 1,5 bis 4 Masseanteile in % granulierte Natriumcyanid mittels klassierendem Abzug und Zellenrad (16) der als Wirbelschicht eines Trockners (14) ausgebildeten zweiten Verfahrensstufe zur Trocknung durch einen Luftstrom (25) mit Anfangstemperaturen von 150 bis 230°C auf eine beliebige einstellbare Restfeuchte von kleiner 1,5 Masseanteile in % zugeführt und über ein Zellenrad (23) abgezogen wird, und daß das Trocknungsgas der zweiten Verfahrensstufe der ersten Verfahrensstufe zur Erzeugung der Wirbelschicht für die Wirbelschichtgranulierung zugeführt wird, wobei die Luft dabei auf 60 bis 90°C abgekühlt wird.

2. Verfahren nach Anspruch 1, dadurch gekennzeichnet, daß die wäßrige Natriumcynidlösung (1) ungekühlt aus einem kontinuierlichen Neutralisator dem Wirbelschichtgranulator (4) zugeführt wird.

## Claims

1. A process for the production of solid granulated sodium cyanide, wherein an aqueous solution of sodium cyanide (1) of 30 to 45% by mass, containing up to 5% by mass of solid, is added to a fluidised bed granulation, characterised in that production takes place in two process stages wherein the sodium cyanide, granulated in the first process stage by means of per se known fluidised bed granulation to a grain size of 2 to 6 mm and a residual moisture of 1.5 to 4% by mass, is added by means of a grading outlet and bucket wheel (16) to the second process stage, designed as a fluidised bed of a dryer (14), for drying in an air stream (25) with initial temperatures of 150° C to 230° C until it reaches a freely-selectable residual moisture of less than 1.5% by mass and is drawn off by means of a bucket wheel (23), and that the drying gas of the second process stage is supplied to the first process stage to generate the fluidised bed for the fluidised bed granulation, wherein the air is thereby cooled to 60 to 90° C.

2. A process according to claim 1, characterised in that the aqueous sodium cyanide solution (1) is added uncooled to the fluidised bed granulator (41) from a continuous neutraliser.

## Revendications

1. Procédé de préparation de cyanure de sodium solide en granulés, dans lequel une solution aqueuse de cyanure de sodium (1) de 30 à 45 pour-cent en masse, qui contient jusqu'à 5 pour-cent en masse de solide, est ajoutée à une composition de granulation en couche fluidisée,
**caractérisé en ce que** la préparation s'effectue en deux étapes opératoires, au cours desquelles le cyanure de sodium, obtenu dans la première étape opératoire, granulé au moyen d'une granulation en couche fluidisée connue en soi, lui conférant une taille de grain comprise entre 2 et 6 mm et une humidité résiduelle comprise entre 1,5 et 4 pour-cent en masse est ajouté, au moyen d'un canal de décharge et d'une roue cellulaire de triage (16) à la seconde étape opératoire conçue en tant que couche fluidisée d'un séchoir (14) pour un séchage sous un jet d'air (25) avec des températures de départ comprises entre 150 °C et 230 °C, lui conférant une humidité résiduelle inférieure à 1,5 pour-cent en masse et ajustable selon les besoins, et déchargé via une roue cellulaire (23), et en ce que le gaz de séchage de la seconde étape opératoire est ajouté à celui de la première étape opératoire pour générer la couche fluidisée servant à la granulation en couche fluidisée, l'air étant à cet égard refroidi à une température comprise entre 60 °C et 90 °C.

2. Procédé selon la revendication 1, caractérisé en ce que la solution aqueuse de cyanure de sodium (1) est amenée sans être refroidie depuis un neutralisateur en continu dans le granulateur en couche fluidisée (4).
